# FASCICULE DE BREVET EUROPEEN

(11) **EP 1 707 486 B1**
(45) Date de publication et mention de la délivrance du brevet: **19.11.2008**
(21) Numéro de dépôt: 06290352.1
(22) Date de dépôt: 02.03.2006
(51) Int. Cl.: B64D 11/06, B61D 31/00, B60N 2/34, B60P 3/38

(54) **Pièce de mobilier pour véhicule, notamment pour aéronef**
Möbelstück für Fahrzeuge, insbesondere für Flugzeuge
Piece of furniture for vehicle, in particular for aircraft

(30) Priorité: 31.03.2005 FR 0503127
(43) Date de publication de la demande: 04.10.2006
(73) Titulaire: EADS SOGERMA, 33700 Mérignac (FR)
(72) Inventeur: Martin, Gabriel, 17620 Echillais (FR)
(74) Mandataire: Bonnetat, Christian

(56) Documents cités:
- WO-A-20/06054104
- US-A1- 2002 070 314
- US-B1- 6 398 164

## Description

La présente invention concerne une pièce de mobilier pour véhicule, notamment pour aéronef, ainsi qu'un agencement d'une pluralité de telles pièces de mobilier identiques.

Une telle pièce de mobilier est connue de US-6398164 B1, qui montre toutes les caractéristiques du préambule de la revendication indépendante.

On sait que, dans un véhicule, les passagers sont assis dans des fauteuils disposés en files longitudinales et en rangées transversales. Lorsque le véhicule est prévu pour effectuer de longs voyages, lesdits fauteuils peuvent éventuellement être du type transformable en lit, afin d'améliorer le confort des passagers en leur permettant de se coucher. Cependant, dans ce cas, les rangées de fauteuils doivent être très écartées les unes des autres (de l'ordre de deux mètres) pour permettre le déploiement longitudinal desdits fauteuils transformables. Il en résulte une réduction importante du nombre des places disponibles dans le véhicule.

La présente invention a pour objet de remédier à cet inconvénient en permettant à au moins certains passagers d'un véhicule de se coucher, sans pour cela réduire de façon excessive le nombre des places disponibles dans ledit véhicule.

A cette fin, selon l'invention , telle que définie par les caractéristiques de la revendication indépendante 1, la pièce de mobilier pour véhicule, notamment pour aéronef, est remarquable :
- en ce qu'elle comporte un fauteuil et une banquette, accolée latéralement audit fauteuil de façon solidaire ;
- en ce que la direction générale de ladite banquette est inclinée, vers l'avant dudit fauteuil, par rapport à la direction dans laquelle regarde celui-ci ; et
- en ce que le siège dudit fauteuil et le siège de ladite banquette sont disposés au même niveau, de manière à former une surface apte à servir de lit.

Ainsi, grâce au fait, d'une part, que la banquette est inclinée et, d'autre part, que la surface servant de lit est obtenue sans basculement vers l'arrière du dossier du fauteuil, l'écartement entre deux rangées successives de pièces de mobilier conformes à la présente invention peut être réduit de façon importante. C'est ainsi que dans les agencements décrits ci-après, un tel écartement peut être seulement de l'ordre du mètre (soit 50% de moins environ qu'avec les fauteuils transformables mentionnés ci-dessus).

Comme on le verra ci-après, un mode de réalisation avantageux de la pièce de mobilier de l'invention (en ce qui concerne l'encombrement d'un agencement d'une pluralité de telles pièces de mobilier) est remarquable en ce que le siège de ladite banquette présente la forme d'un parallélogramme délimité par un bord longitudinal avant et un bord longitudinal arrière, inclinés par rapport à ladite direction dans laquelle regarde ledit fauteuil, et par un bord transversal distal et un bord transversal proximal, parallèles à ladite direction, ladite banquette étant accolée audit fauteuil par son bord transversal proximal.

De préférence, ledit parallélogramme est un losange.

Ledit bord transversal proximal du siège de ladite banquette peut présenter une longueur supérieure à la profondeur du siège dudit fauteuil.

Dans ce cas, afin d'augmenter la surface du lit sans augmenter l'encombrement de la pièce de mobilier conforme à la présente invention, il est avantageux que ledit fauteuil comporte une partie mobile escamotable capable d'agrandir vers l'avant le siège dudit fauteuil en lui communiquant une profondeur au moins approximativement égale à ladite longueur dudit bord transversal proximal.

De préférence, cette partie mobile est apte à former un repose-pied pour ledit fauteuil.

Afin de permettre au passager de s'asseoir pour aisément entrer ou sortir de ladite pièce de mobilier, il est préférable que ladite partie mobile comporte deux éléments articulés l'un à l'autre, l'un, interne, étant articulé audit fauteuil et l'autre, externe, pouvant être rabattu indépendamment de l'élément interne.

Par ailleurs, il est avantageux que le siège de ladite banquette comporte, dans son bord transversal proximal, en avant dudit fauteuil, une partie escamotable capable de former une échancrure dans ledit bord transversal proximal. Ainsi, lorsqu'une personne visite le passager occupant ladite pièce de mobilier, elle peut s'asseoir confortablement sur la banquette avec ses jambes placées dans ladite échancrure, sans gêner le passager assis dans le fauteuil.

Le fauteuil de la pièce de mobilier conforme à la présente invention peut comporter un accotoir du côté de ladite banquette. Cependant, cet accotoir est avantageusement escamotable pour dégager l'accès à ladite surface apte à servir de lit.

Dans le but d'isoler le passager occupant ladite pièce de mobilier de son environnement, celle-ci peut comporter une paroi latérale prolongeant extérieurement le dossier dudit fauteuil en suivant le bord longitudinal arrière du siège de ladite banquette et en faisant saillie vers le haut par rapport audit siège.

Ladite paroi latérale peut, de plus, suivre le bord transversal distal dudit siège. En outre, le fauteuil peut, dans son accotoir disposé du côté opposé à la banquette, loger une plaque mobile, par exemple en verre fumé, pouvant prendre une position de déploiement en saillie au-dessus dudit accotoir.

Afin d'aménager intérieurement un véhicule, par exemple une cabine pour passagers d'aéronef, on peut réaliser, conformément à la présente invention, un agencement remarquable :
- en ce qu'il comporte une pluralité de pièces de mobilier identiques, telles que décrites ci-dessus ; et
- en ce que lesdites pièces de mobilier sont disposées en file l'une derrière l'autre, avec les fauteuils regardant tous vers l'avant dudit véhicule et les banquettes toutes disposées d'un même côté desdits fauteuils.

Pour réduire de façon optimale l'encombrement d'un tel agencement, lesdites pièces de mobilier peuvent être emboîtées les unes dans les autres de façon que le bord longitudinal avant du siège de la banquette d'une des pièces de mobilier de la file épouse le bord longitudinal arrière du siège de la banquette de la pièce de mobilier précédente. Les bords transversaux distaux des sièges des banquettes de la file sont alors alignés.

Ainsi, deux pièces de mobilier consécutives dans ladite file peuvent délimiter entre elles une loge fermée par les dossiers des fauteuils et les parois latérales des banquettes, ainsi que, éventuellement, par une surface (fuselage, cloison interne, etc ...) appartenant audit véhicule et complétant lesdites parois latérales.

Ainsi, chaque passager dispose d'un compartiment cloisonné privé à l'intérieur dudit véhicule.

Bien entendu, notamment en fonction de la position des pièces de mobilier à l'intérieur du véhicule, la banquette latérale de ces pièces peut se trouver d'un côté ou de l'autre du fauteuil.

Les figures du dessin annexé feront bien comprendre comment l'invention peut être réalisée. Sur ces figures, des références identiques désignent des éléments semblables.
La figure 1 montre schématiquement, en perspective du dessus et de l'avant, un premier exemple de pièce de mobilier conforme à la présente invention.
La figure 2 est une vue de dessus schématique de la pièce de mobilier de la figure 1 .
La figure 3 illustre, en vue semblable à la figure 1, des particularités de la pièce de mobilier conforme à la présente invention.
La figure 4 est une vue de dessus schématique de la pièce de mobilier montrée sur la figure 3.
La figure 5 correspond à la figure 2 et illustre l'escamotage d'une partie mobile de la banquette de la pièce de mobilier correspondante.
La figure 6 montre schématiquement, en perspective du dessus et de l'avant, un second exemple de pièce de mobilier conforme à la présente invention.
La figure 7 est une vue de dessus schématique de la pièce de mobilier de la figure 6.
La figure 8 illustre, en vue de dessus schématique, un agencement de pièces de mobilier telles que celles montrées par les figures 1 et 2.
La figure 9 illustre, en vue de dessus schématique, un agencement de pièces de mobilier telles que celles montrées par les figures 6 et 7.

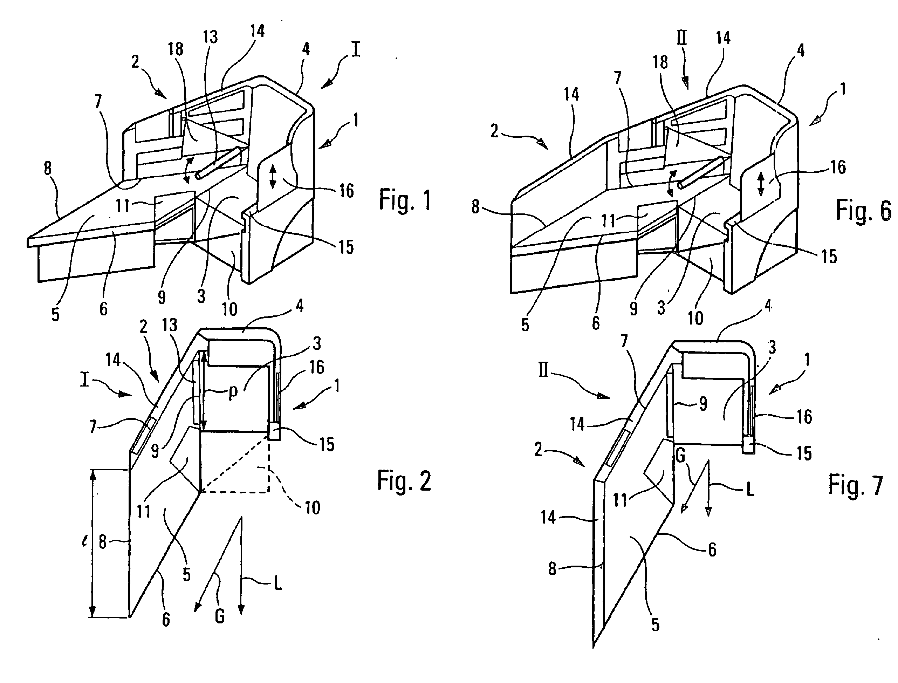

La pièce de mobilier I pour véhicule, notamment pour aéronef, montrée par les figures 1 et 2, comporte un fauteuil 1 et une banquette 2, solidaires l'un de l'autre.

La banquette 2 est accolée latéralement au fauteuil 1 et sa direction générale G est inclinée, vers l'avant dudit fauteuil 1, par rapport à la direction L dans laquelle regarde celui-ci.

Le fauteuil 1 comporte un siège 3 et un dossier 4. La banquette inclinée 2 comporte un siège 5, délimité par un bord longitudinal avant 6, un bord longitudinal arrière 7, un bord transversal distal 8 et un bord transversal proximal 9. Les bords 6 à 9 confèrent audit siège 5 une forme de losange. La banquette 2 est accolée au fauteuil 1 par son bord transversal proximal 9.

Le siège 3 du fauteuil 1 et le siège 5 de la banquette 2 sont disposés au même niveau pour former une surface continue 3, 5 apte à servir de lit.

Le bord longitudinal avant 6 et le bord longitudinal arrière 7 sont inclinés parallèlement à la direction générale G et le bord transversal distal 8 et le bord transversal proximal 9 sont parallèles à la direction L.

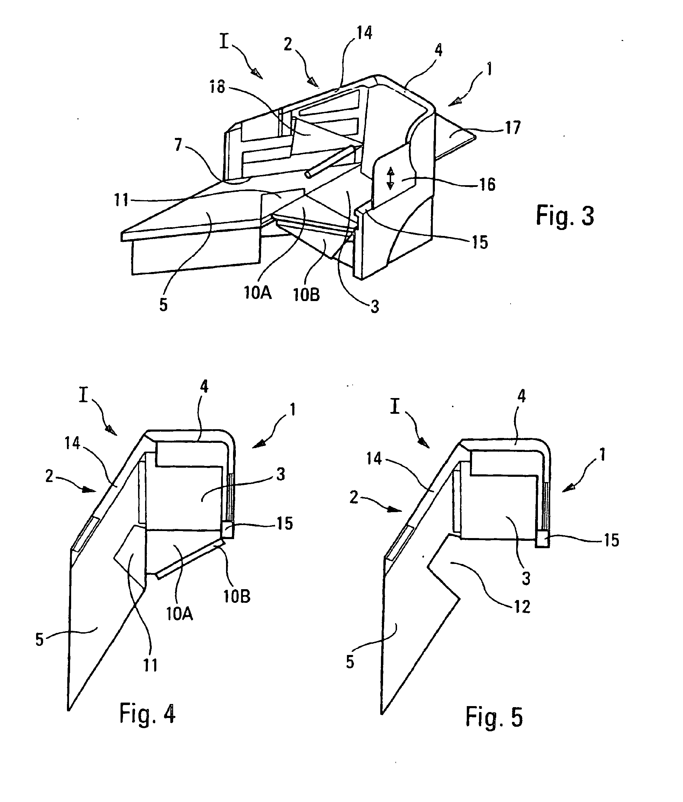

Les bords transversaux distal 8 et proximal 9 ont une longueur ℓ supérieure à la profondeur p du siège 3 du fauteuil 1 et celui-ci comporte une partie mobile escamotable 10 capable d'agrandir vers l'avant le siège 3 du fauteuil 1, en lui communiquant une profondeur voisine de la longueur des bords transversaux 8 et 9. Sur les figures 1 et 5, la partie mobile 10 est représentée en position escamotée, alors qu'elle est représentée en pointillés en position déployée sur la figure 2. Dans ce dernier cas, on voit qu'elle complète la surface de lit 3, 5 en avant du fauteuil 1.

La partie mobile 10 peut de plus occuper une position inclinée vers le bas (non représentée sur les figures) pour pouvoir servir de repose-pied au fauteuil 1.

En revanche, les figures 1, 2, 3 et 4 montrent que la partie mobile 10 est composée d'un élément interne 10A et d'un élément externe 10B, articulés l'un à l'autre. L'élément interne 10A est articulé au fauteuil 1, alors que l'élément externe 10B peut être rabattu indépendamment de l'élément interne 10A (voir les figures 3 et 4).

Par ailleurs, la banquette 2 comporte, dans son bord transversal proximal 9, en avant du siège 3, une partie escamotable 11, capable de former une échancrure 12 dans ledit bord transversal proximal 9. Ladite échancrure 12 (voir la figure 5) peut être adjacente au siège 3.

Du côté de la banquette 2, le fauteuil 1 comporte un accotoir 13 escamotable.

De plus, la banquette 2 comporte une paroi latérale 14 prolongeant extérieurement le dossier 4 du fauteuil 1 en suivant le bord longitudinal arrière 7 du siège 5 de ladite banquette 2 et en faisant saillie vers le haut par rapport audit siège 5.

Du côté opposé à la banquette 2, le fauteuil 1 comporte un accotoir 15, à l'intérieur duquel une plaque mobile 16 est logée. Cette plaque mobile 16 peut prendre une position déployée (voir les figures 1 et 3), en saillie au-dessus de l'accotoir 15, permettant d'isoler, du côté de ce dernier, le passager (non représenté) assis dans ledit fauteuil 1.

La pièce de mobilier peut comporter d'autres dispositifs, tels que des tablettes rabattables 17, 18, des vide-poches, des coffres, des appareils de branchement électriques, etc ... (non référencés).

La variante de réalisation II de la pièce de mobilier selon l'invention, représentée sur les figures 6 et 7, comporte les éléments 1 à 18 décrits ci-dessus. Cependant, dans cette pièce de mobilier II, la paroi saillante 14 s'étend de plus le long du bord transversal distal 8 du siège 5.

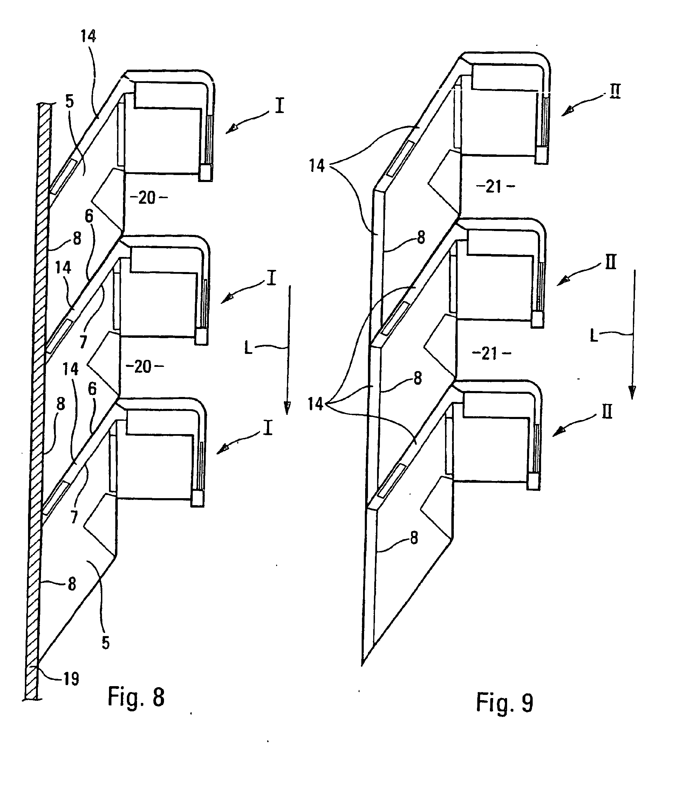

Sur la figure 8, on a représenté, en vue de dessus, un agencement d'une pluralité de pièces de mobilier I, conformes à la présente invention. On peut y voir que :
- les pièces de mobilier I sont disposées en file l'une derrière l'autre, tous les fauteuils 1 regardant dans la même direction L, qui peut indiquer l'avant d'un véhicule, et toutes les banquettes 2 sont disposées d'un même côté ;
- les pièces de mobilier I sont emboîtées les unes dans les autres de façon que le bord longitudinal avant 6 du siège 5 de la banquette d'une des pièces I épouse le bord longitudinal arrière 7 du siège 5 de la pièce I précédente ;
- les bords transversaux distaux 8 des sièges 5 de la file sont alignés ; et
- les bords transversaux distaux 8 sont appliqués contre une surface 19, par exemple la paroi de la cabine d'un aéronef.

Ainsi, la surface 19, les dossiers 4 des fauteuils 1 et les parois latérales 14 délimitent, entre deux pièces de mobilier I consécutives, une loge fermée 20, dont l'isolement peut encore être augmenté grâce à la plaque mobile 16, agencée dans l'accotoir 15.

La figure 9 illustre un agencement semblable à celui décrite en regard de la figure 8, mais composé de pièces de mobilier II. Dans ce cas, du fait que les bords transversaux distaux 8 sont également pourvus de la paroi saillante 14, des loges 21 peuvent être formées entre deux pièces II consécutives, sans nécessité d'utiliser une surface 19.

On comprendra aisément que, bien que sur les figures 1 à 9 on ait représenté les banquettes 2 disposées à droite des fauteuils 1, lesdites banquettes 2 pourraient être accolées à la gauche de ceux-ci.

On remarquera de plus que, dans le cas où les fauteuils 1 comportent une tablette externe repliable 17, aussi bien le passager assis dans le fauteuil 1 d'une loge 20 ou 21 que son visiteur assis sur le siège 5 avec les jambes dans l'échancrure 12 peuvent accéder à ladite tablette ménagée dans l'arrière du fauteuil précédent.

## Revendications

1. Pièce de mobilier pour véhicule, notamment pour aéronef:
- qui comporte un fauteuil (1) et une banquette (2), accolée latéralement audit fauteuil de façon fixe ; et
- dans laquelle le siège (3) dudit fauteuil (1) et le siège (5) de ladite banquette (2) sont disposés au même niveau, de manière à former une surface apte à servir de lit, **caracterisée en ce que** la direction générale (G) de ladite banquette (2) est inclinée, vers l'avant dudit fauteuil (1), par rapport à la direction (L) dans laquelle regarde celui-ci.

2. Pièce de mobilier selon la revendication 1, **caractérisée en ce que** le siège (5) de ladite banquette présente la forme d'un parallélogramme délimité par un bord longitudinal avant (6) et un bord longitudinal arrière (7), inclinés par rapport à ladite direction (L) dans laquelle regarde ledit fauteuil (1), et par un bord transversal distal (8) et un bord transversal proximal (9), parallèles à ladite direction (L), ladite banquette (2) étant accolée audit fauteuil (1) par son bord transversal proximal (9).

3. Pièce de mobilier selon la revendication 2,
**caractérisée en ce que** ledit parallélogramme est un losange.

4. Pièce de mobilier selon l'une des revendications 2 ou 3,
**caractérisée en ce que** ledit bord transversal proximal (9) du siège (5) de ladite banquette (2) présente une longueur (ℓ) supérieure à la profondeur (p) du siège (3) dudit fauteuil (1) et **en ce que** ledit fauteuil comporte une partie mobile escamotable (10) capable d'agrandir vers l'avant le siège (3) dudit fauteuil en lui communiquant une profondeur au moins approximativement égale à ladite longueur dudit bord transversal proximal (9).

5. Pièce de mobilier selon la revendication 4,
**caractérisée en ce que** ladite partie mobile (10) est apte à former un repose-pied pour ledit fauteuil.

6. Pièce de mobilier selon l'une des revendications 4 ou 5,
**caractérisée en ce que** ladite partie mobile (10) comporte deux éléments articulés l'un à l'autre, l'un, interne (10A), étant articulé audit fauteuil (1) et l'autre, externe (10B), pouvant être rabattu indépendamment de l'élément interne (10A).

7. Pièce de mobilier selon l'une des revendications 2 à 6,
**caractérisée en ce que** le siège (5) de ladite banquette (2) comporte, dans son bord transversal proximal (9), en avant du siège (3) dudit fauteuil, une partie escamotable (11) capable de former une échancrure (12) dans ledit bord transversal proximal (9).

8. Pièce de mobilier selon l'une des revendications 1 à 7,
**caractérisée en ce que**, du côté de ladite banquette (2), ledit fauteuil (1) comporte un accotoir escamotable (13).

9. Pièce de mobilier selon l'une des revendications 2 à 8,
**caractérisée en ce que** ladite banquette (2) comporte une paroi latérale (14) prolongeant extérieurement le dossier (4) dudit fauteuil (1) en suivant le bord longitudinal arrière (7) du siège (5) de ladite banquette (2) et en faisant saillie vers le haut par rapport audit siège (5).

10. Pièce de mobilier selon la revendication 9,
**caractérisée en ce que** ladite paroi latérale (14) suit de plus le bord transversal distal (8) du siège (5) de ladite banquette (2).

11. Pièce de mobilier selon l'une des revendications 1 à 10,
**caractérisée en ce que** ledit fauteuil (1) comporte un accotoir (15) du côté opposé à ladite banquette (2) et **en ce qu'**une plaque mobile (16) est logée dans ce dernier accotoir et peut prendre une position de déploiement en saillie au-dessus de celui-ci.

12. Agencement de mobilier pour véhicule, notamment pour aéronef,
**caractérisé :**
- **en ce qu'**il comporte une pluralité de pièces de mobilier identiques, telles que spécifiées sous l'une quelconque des revendications 1 à 11 ; et
- **en ce que** lesdites pièces de mobilier sont disposées en file l'une derrière l'autre, avec les fauteuils (1) regardant tous vers l'avant dudit véhicule et les banquettes (2) toutes disposées d'un même côté desdits fauteuils.

13. Agencement de mobilier selon la revendication 12,
**caractérisé en ce que** lesdites pièces de mobilier sont emboîtées les unes dans les autres de façon que le bord longitudinal avant (6) du siège (5) de la banquette (2) d'une des pièces de mobilier de la file épouse le bord longitudinal arrière (7) du siège (5) de la banquette (2) de la pièce de mobilier précédente.

14. Agencement de mobilier selon la revendication 13 constitué de pièces de mobilier telles que spécifiées sous les revendication 2 ou 3, **caractérisé en ce que** les bords transversaux distaux (8) des sièges (5) des banquettes (2) de la file sont alignés.

15. Agencement de mobilier selon la revendication 14, constitué de pièces de mobilier telles que celles spécifiées sous la revendication 9, **caractérisé en ce que** deux pièces de mobilier consécutives dans ladite file délimitent entre elles une loge (20) fermée par les dossiers (4) des fauteuils (1) et les parois latérales (14) des banquettes (2) desdites pièces de mobilier, ainsi que par une surface (19) appartenant audit véhicule.

16. Agencement de mobilier selon la revendication 14 constitué de pièces de mobilier telles que spécifiées sous la revendication 10, **caractérisé en ce que** deux pièces de mobilier consécutives dans ladite file délimitent entre elles une loge (21) fermée par les dossiers (4) des fauteuils (1) et les parois latérales (14) des banquettes (2) desdites pièces de mobilier.

## Claims

1. A furniture unit for a vehicle, especially an aircraft:
- which comprises a seat (1) and, joined permanently to the side of said seat, a couch (2); and
- in which the squab (3) of said seat (1) and the squab (5) of said couch (2) are located at the same level, in such a way as to form a surface suitable for use as a bed,
**characterized in that** the general direction (G) of said couch (2) is angled, forwards of said seat (1), with respect to the direction (L) in which the seat faces.

2. The furniture unit as claimed in claim 1,
**characterized in that** the squab (5) of said couch is in the shape of a parallelogram defined by a front longitudinal edge (6) and a rear longitudinal edge (7), both being angled with respect to said direction (L) in which said seat (1) is facing, and by a distal transverse edge (8) and a proximal transverse edge (9), both parallel to said direction (L), said couch (2) being joined to said seat (1) by its proximal transverse edge (9).

3. The furniture unit as claimed in claim 2,
**characterized in that** said parallelogram is a lozenge.

4. The furniture unit as claimed in one of claims 2 or 3,
**characterized in that** said proximal transverse edge (9) of the squab (5) of said couch (2) has a length (ℓ) greater than the depth (p) of the squab (3) of said seat (1) and in which said seat comprises a retractable movable part (10) capable of augmenting the squab (3) of said seat at the front by giving it a depth approximately equal to said length of said proximal transverse edge (9).

5. The furniture unit as claimed in claim 4 ,
**characterized in that** said movable part (10) is able to form a leg rest for said seat.

6. The furniture unit as claimed in one of claims 4 or 5,
**characterized in that** said movable part (10) comprises two elements hinged together, one (10A) being an inner element and hinged to said seat (1), and the other (10B) being an outer element and being able to be folded up independently of the inner element (10A).

7. The furniture unit as claimed in one of claims 2 to 6,
**characterized in that** the squab (5) of said couch (2) comprises, in its proximal transverse edge (9), forward of the squab (3) of said seat, a retractable part (11) capable of forming a recess (12) in said proximal transverse edge (9).

8. The furniture unit as claimed in one of claims 1 to 7,
**characterized in that** said seat (1) has a retractable armrest (13) next to said couch (2).

9. The furniture unit as claimed in one of claims 2 to 8,
**characterized in that** said couch (2) has a side wall (14) forming an external extension of the backrest (4) of said seat (1) which follows the rear longitudinal edge (7) of the squab (5) of said couch (2) and projects upward from said squab (5).

10. The furniture unit as claimed in claim 9,
**characterized in that** said side wall (14) also follows the distal transverse edge (8) of the squab (5) of said couch (2).

11. The furniture unit as claimed in one of claims 1 to 10,
**characterized in that** said seat (1) has an armrest (15) on the side away from said couch (2) and in which a movable plate (16) is housed in the latter armrest and can adopt a position of deployment in which it projects above the latter.

12. A furniture layout for a vehicle, especially an aircraft,
**characterized:**
- **in that** it comprises a plurality of identical furniture units as specified in one of claims 1 to 11; and
- **in that** said furniture units are arranged in column one behind the other, with the seats (1) all facing the front of said vehicle and the couches (2) all positioned on the same side of said seats.

13. The furniture layout as claimed in claim 12,
**characterized in that** said furniture units interlock in such a way that the front longitudinal edge (6) of the squab (5) of the couch (2) of one of the furniture units of the column fits against the rear longitudinal edge (7) of the squab (5) of the couch (2) of the furniture unit in front.

14. The furniture layout as claimed in claim 13 consisting of furniture units as specified in claims 2 or 3,
**characterized in that** the distal transverse edges (8) of the squabs (5) of the couches (2) of the column are in line with each other.

15. The furniture layout as claimed in claim 14, consisting of furniture units as specified in claim 9,
**characterized in that** two consecutive furniture units in said column define between themselves a cubicle (20) closed by the backrests (4) of the seats (1) and the side walls (14) of the couches (2) of said furniture units, and by a surface (19) belonging to said vehicle.

16. The furniture layout as claimed in claim 14 consisting of furniture units as specified in claim 10, **characterized in that** two consecutive furniture units of said column define between themselves a cubicle (21) closed by the backrests (4) of the seats (1) and the side walls (14) of the couches (2) of said furniture units.

## Patentansprüche

1. Möbelstück für ein Fahrzeug, insbesondere für ein Luftfahrzeug:
das einen Sessel (1) und eine seitlich fest am Sessel angesetzte Bank (2) aufweist; und
in dem der Sitzbereich (3) des Sessels (1) und der Sitzbereich (5) der Bank (2) derart auf der gleichen Höhe angeordnet sind, dass sie eine Fläche bilden, die als Bett dienen kann,
**dadurch gekennzeichnet, dass** die allgemeine Richtung (G) der Bank (2) in Richtung Vorderseite des Sessels (1) in Bezug auf die Richtung (L), in die dieser schaut, geneigt ist.

2. Möbelstück nach Anspruch 1,
**dadurch gekennzeichnet, dass** der Sitzbereich (5) der Bank die Form eines Parallelogramms aufweist, das von einem vorderen Längsrand (6) und einem hinteren Längsrand (7), die in Bezug auf die Richtung (L), in die der Sessel (1) schaut, geneigt sind, und von einem entfernten Querrand (8) und einem nahen Querrand (9), die parallel zur Richtung (L) verlaufen, begrenzt ist, wobei die Bank (2) mit ihrem nahen Querrand (9) am Sessel (1) angesetzt ist.

3. Möbelstück nach Anspruch 2,
**dadurch gekennzeichnet, dass** das Parallelogramm eine Raute ist.

4. Möbelstück nach einem der Ansprüche 2 oder 3,
**dadurch gekennzeichnet, dass** der nahe Querrand (9) des Sitzbereiches (5) der Bank (2) eine Länge (1) aufweist, die größer ist als die Tiefe (p) des Sitzbereiches (3) des Sessels (1) und dass der Sessel einen beweglichen einziehbaren Teil (10) aufweist, der in der Lage ist, den Sitzbereich (3) des Sessels nach vorn zu vergrößern, in dem er ihm eine Tiefe verleiht, die mindestens annähernd der Länge des nahen Querrandes (9) entspricht.

5. Möbelstück nach Anspruch 4,
**dadurch gekennzeichnet, dass** der bewegliche Teil (10) eine Fußablage für den Sessel ausbilden kann.

6. Möbelstück nach einem der Ansprüche 4 oder 5,
**dadurch gekennzeichnet, dass** der bewegliche Teil (10) zwei miteinander gelenkig verbundene Elemente aufweist, wobei das eine, innere (10A), am Sessel (1) angelenkt ist, und das andere, äußere (10B), unabhängig vom inneren Element (10A) herunter klappbar ist.

7. Möbelstück nach einem der Ansprüche 2 bis 6,
**dadurch gekennzeichnet, dass** der Sitzbereich (5) der Bank (2) in seinem nahen Querrand (9), vor dem Sitzbereich (3) des Sessels, einen einziehbaren Teil (11) aufweist, der in der Lage ist, eine Einbuchtung (12) in dem nahen Querrand (9) zu bilden.

8. Möbelstück nach einem der Ansprüche 1 bis 7,
**dadurch gekennzeichnet, dass,** auf der Seite der Bank (2), der Sessel (1) eine einziehbare Armlehne (13) aufweist.

9. Möbelstück nach einem der Ansprüche 2 bis 8,
**dadurch gekennzeichnet, dass** die Bank (2) eine Seitenwand (14) aufweist, die nach außen die Rückenlehne (4) des Sessels (1) verlängert, indem sie entlang des hinteren Längsrands (7) des Sitzbereichs (5) der Bank (2) verläuft und mit Bezug auf den Sitzbereich (5) nach oben ragt.

10. Möbelstück nach Anspruch 9,
**dadurch gekennzeichnet, dass** die Seitenwand (14) zudem entlang des entfernten Querrands (8) des Sitzbereichs (5) der Bank (2) verläuft.

11. Möbelstück nach einem der Ansprüche 1 bis 10,
**dadurch gekennzeichnet, dass** der Sessel (1) auf der Seite, die der Bank (2) gegenüber liegt, eine Armlehne (15) aufweist, und dass eine bewegliche Platte (16) in dieser letzteren Armlehne einsitzt und eine ausgefahrene Stellung einnehmen kann, in der sie von diesem nach oben hervorragt.

12. Möbelanordnung für Fahrzeuge, insbesondere für ein Luftfahrzeug,
**dadurch gekennzeichnet,**
- **dass** sie mehrere identische Möbelstücke nach einem der Ansprüche 1 bis 11 aufweist; und
- **dass** die Möbelstücke hintereinander aufgereiht sind, wobei die Sessel (1) alle nach vorn im Fahrzeug schauen und die Bänke (2) alle auf der gleichen Seite der Sessel angeordnet sind.

13. Möbelanordnung nach Anspruch 12,
**dadurch gekennzeichnet, dass** die Möbelstücke derart ineinander greifen, dass der vordere Längsrand (6) des Sitzbereichs (5) der Bank (2) eines der Möbelstücke aus der Reihe passgenau am hinteren Längsrand (7) des Sitzbereichs (5) der Bank (2) des davor liegenden Möbelstücks anliegt.

14. Möbelanordnung nach Anspruch 13, bestehend aus Möbelstücken nach den Ansprüchen 2 oder 3,
**dadurch gekennzeichnet, dass** die entfernten Querränder (8) der Sitzbereiche (5) der Bänke (2) der Reihe miteinander fluchten.

15. Möbelanordnung nach Anspruch 14, bestehend aus Möbelstücken nach Anspruch 9,
**dadurch gekennzeichnet, dass** zwei in der Reihe hintereinander liegende Möbelstücke einen Raum (20) begrenzen, der durch die Rückenlehnen (4) der Sessel (1) und durch die Seitenwände (14) der Bänke (2) der Möbelstücke sowie durch eine zum Fahrzeug gehörende Fläche (19) geschlossen ist.

16. Möbelanordnung nach Anspruch 14, bestehend aus Möbelstücken nach Anspruch 10,
**dadurch gekennzeichnet, dass** zwei in der Reihe hintereinander liegende Möbelstücke einen Raum (21) begrenzen, der durch die Rückenlehnen (4) der Sessel (1) und durch die Seitenwände (14) der Bänke (2) der Möbelstücke geschlossen ist.
